# EUROPÄISCHE PATENTANMELDUNG

(11) **EP 0 701 199 A2**
(43) Veröffentlichungstag der Anmeldung: **13.03.1996**
(21) Anmeldenummer: 95202163.2
(22) Anmeldetag: 09.08.1995
(51) Int. Cl.: G06F 3/147, G09G 3/04

(54) **Anzeigeanordnung mit mehreren Anzeigeeinheiten und einer Steuerschaltung**

(30) Priorität: 13.08.1994 DE 4428776
(71) Anmelder: Philips Patentverwaltung GmbH, D-22335 Hamburg (DE); PHILIPS ELECTRONICS N.V., NL-5621 BA Eindhoven (NL)
(72) Erfinder: Michaelis, Uwe, c/o Philips, D-22335 Hamburg (DE)
(74) Vertreter: Hartmann, Heinrich, Dipl.-Ing.

(57) **Zusammenfassung**

Die Erfindung betrifft eine Anzeigeanordnung mit mehreren Anzeigeeinheiten (D₁,D₂...Dₙ), wobei jede Anzeigeeinheit sich aus einer Anzahl von im Multiplex-Betrieb gesteuerten Anzeigestellen zusammensetzt, von denen jede eine Mehrzahl von gleichzeitig, aber unabhängig voneinander schaltbaren Anzeigeelementen mit je einem Anzeigetreiber (z.B. T₁) umfaßt, und mit einer Schaltungsanordnung zur Steuerung der Anzeigeanordnung. Um eine Steuerung durch einen Mikrocontroller zu ermöglichen, der zugleich auch noch weitere Steueraufgaben durchführen kann, ist die Anordnung gekennzeichnet durch
a) einen Speicher (M), in dem die auf der Anzeigeanordnung auszugebende Information gespeichert ist,
b) einen Mikrocontroller (MC) mit wenigstens einer synchronen seriellen Schnittstelle (2) und mit periodisch aktivierten Mitteln (3) zum Transfer der jeweils für die gleiche Anzeigestelle der Anzeigeeinheiten (D₁,D₂...Dₙ) bestimmten Daten vom Speicher zur Schnittstelle,
c) eine an die serielle Schnittstelle (2) angeschlossenen Schieberegisteranordnung (S₁, S₂...Sₙ) mit parallelem Ausgang und
d) an den parallelen Ausgang der Schieberegisteranordnung angeschlossene Speicherglieder (L₁, L₂...Lₙ) zur periodischen Übernahme des Inhalts der Schieberegisteranordnung und zur Steuerung der Anzeigetreiber (T₁, T₂...Tₙ) .

## Beschreibung

Die Erfindung betrifft eine Anzeigeanordnung mit mehreren Anzeigeeinheiten, wobei jede Anzeigeeinheit sich aus einer Anzahl von im Multiplex-Betrieb gesteuerten Anzeigestellen zusammensetzt, von denen jede eine Mehrzahl von gleichzeitig, aber unabhängig voneinander schaltbaren Anzeigeelementen mit je einem Anzeigetreiber umfaßt, und mit einer Schaltungsanordnung zur Steuerung der Anzeigeanordnung.

Solche Anzeigeanordnungen können beispielsweise bei einem Röntgengenerator eingesetzt werden, um einen alphanumerischen Text begrenzter Länge wiederzugeben. Als Anzeigeeinheit eignen sich dabei insbesondere Vakuum-Fluoreszenz-Displays mit z.B. je 20 Anzeigestellen. Die Anzeigestellen einer Anzeigeeinheit werden im Multiplex-Betrieb betrieben. Jede Anzeigestelle besteht aus einer Matrix von in der Regel 5*7 punktförmigen, matrixartig angeordneten Anzeigeelementen.

Aufgabe der vorliegenden Erfindung ist es, eine dafür geeignete Anzeigeanordnung anzugeben, die von einem Mikrocontroller betrieben wird, der durch die Anzeigesteuerung zeitlich nur wenig belastet wird, so daß er auch noch eine Anzahl weiterer Aufgaben durchführen kann.

Ausgehend von einer Anzeigeanordnung der eingangs genannten Art wird diese Aufgabe erfindungsgemäß gelöst durch
a) einen Speicher, in dem die auf der Anzeigeanordnung auszugebende Information gespeichert ist,
b) einen Mikrocontroller mit wenigstens einer synchronen seriellen Schnittstelle und mit periodisch aktivierten Mitteln zum Transfer der jeweils für die gleiche Anzeigestelle der Anzeigeeinheiten bestimmten Daten vom Speicher zur Schnittstelle,
c) eine an die serielle Schnittstelle angeschlossenen Schieberegisteranordnung mit parallelem Ausgang und
d) an den parallelen Ausgang der Schieberegisteranordnung angeschlossene Speicherglieder zur periodischen Übernahme des Inhalts der Schieberegisteranordnung und zur Steuerung der Anzeigetreiber.

Nach der Erfindung ist die gesamte auf der Anzeigeanordnung auszugebende Information in dem Speicher gespeichert, und zwar vorzugsweise so, daß unter aufeinanderfolgenden Adressen dieses Speichers die für die gleiche Anzeigestelle in sämtlichen Anzeigeeinheiten bestimmten Daten in einer bestimmten Reihenfolge gespeichert sind. In jedem Multiplex-Zyklus wird ein solcher Datensatz von dem Speicher zu der synchronen, seriellen Schnittstelle des Mikrocontrollers transferiert, so daß die im Speicher parallel vorliegenden Daten in einen seriellen Datenstrom umgesetzt werden. Dieser Datenstrom wird einer Schieberegisteranordnung mit parallelem Ausgang zugeführt, dessen Inhalt periodisch in die Speicherglieder übernommen wird, die die Anzeigetreiber für die Anzeigeelemente steuern.

Nach einer bevorzugten Weiterbildung der Erfindung ist vorgesehen, daß die Mittel zum Transfer der Daten einen DMA-Controller umfassen. Der DMA-Controller entlastet den Mikrocontroller von dem Datentransfer, den er im übrigen wesentlich schneller durchführt als der Mikrocontroller. Es gibt bereits Mikrocontroller, die auf dem gleichen Chip einen DMA-Controller integriert haben.

Eine Weiterbildung der Erfindung sieht vor, daß die Anzeigeeinheiten Vakuumfluoreszenz-Anzeigeeinheiten sind, deren Anzeigestellen durch eine matrixförmige Anordnung der Matrixelemente gebildet wird. Da Vakuum-Fluoreszenz-Displays pro Anzeigestelle eine relativ große Zahl von Anzeigeelementen (35) besitzen, kommen die Vorteile der Erfindung hier besonders zum Tragen.

Eine andere Weiterbildung der Erfindung sieht Mittel zum Steuern der Einschaltdauer der Anzeigestellen vor. Je nach Einschaltdauer sind die Anzeigeeinheiten nur für einen Teil der dafür vorgesehenen Periode eingeschaltet, so daß die Helligkeit entsprechend der Einschaltdauer gesteuert werden kann. Bei verschiedenen Mikrocontrollern ist mit Hilfe von geeigneten Timerschaltungen eine solche Steuerung der Einschaltdauer möglich.

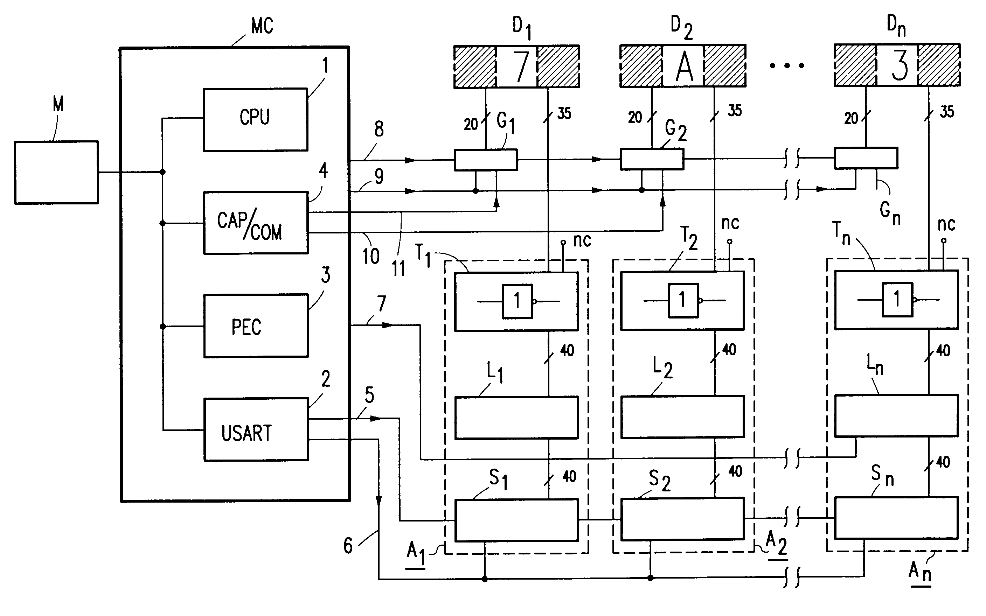

Die Erfindung wird nachstehend anhand eines in der Zeichnung dargestellten Ausführungsbeispiels näher erläutert.

Die Zeichnung zeigt eine aus mehreren Anzeigeeinheiten D₁,D₂...Dₙ bestehende Anzeigeanordnung. Als Anzeigeeinheiten dienen Vakuum-Fluoreszenz-Displays. Bei einem Vakuum-Fluoreszenz-Display (VFD) treffen bekanntlich aus einer oder mehreren Kathoden emittierte Elektronen gittergesteuert auf eine Anzahl von punktförmigen Anoden, wenn diese an eine (positive) Spannung angeschlossen sind. Die Anoden sind mit einer Fluoreszenzschicht versehen, die beim Auftreffen von Elektronen aufleuchtet. Jede VFD-Anzeigeeinheit D₁,D₂...Dₙ besitzt zwanzig Anzeigestellen (in der Zeichnung sind jeweils nur drei - gestrichelt - angedeutet), von denen jeweils eine aktiviert ist (was in der Zeichnung dadurch angedeutet ist, daß die anderen Anzeigestellen schraffiert sind). Jede Anzeigestelle wird durch 5*7 matrixförmig angeordnete und unabhängig voneinander steuerbare Anoden definiert. Diejenigen Anoden, die jeweils am gleichen Ort innerhalb der einzelnen Anzeigestellen angeordnet sind - z.B. links oben - sind miteinander verbunden, so daß sie mit Hilfe von 35 Anschlußleitungen gesteuert werden können. Jede Anzeigestelle besitzt außerdem ein Steuergitter, und von diesen Steuergittern hat stets nur eines eine Spannung, die die Elektronen zu den Anoden der zugeordneten Anzeigestelle durchläßt.

Für jede Anzeigeeinheit D₁,D₂...Dₙ ist eine Anoden-Steuerschaltung A₁,A₂...Aₙ sowie eine Gitter-Steuerschaltung G₁,G₂...Gₙ zugeordnet. Die Anoden-Steuerschaltungen und die Gitter-Steuerschaltungen werden von einem Mikrocontroller MC des Typs SAB 80 C 166 (Siemens) gesteuert. Zu diesem Zweck greift der Mikrocontroller MC auf einen Speicher M zu, in dem die auf der Anzeigeanordnung D₁,D₂...Dₙ auszugebende Information gespeichert ist. Außer dieser Aufgabe erledigt der Mikrocontroller noch eine Fülle weiterer Aufgaben, die in der Zeichnung nicht näher angedeutet sind. Dafür ist wichtig, daß er durch die Anzeigesteuerung zeitlich nicht zu sehr in Anspruch genommen wird. Dieser Mikrocontroller umfaßt auf einem Chip außer einem zentralen Prozessor 1 eine schnelle serielle synchrone Schnittstelle 2, einen DMA-Controller 3 und eine Einheit 4, deren Funktion noch zu erläutern ist. Die Einheiten 1 bis 4 sind über einen gemeinsamen Bus miteinander verbunden.

Die serielle synchrone Schnittstelle 2 ist in der Lage, ihrem Eingang parallel zugeführte 8-Bit-Daten in einen seriellen Datenstrom von bis zu 2,5 Mbaud umzusetzen. Dieser Datenstrom erscheint auf der Ausgangsleitung 5, die somit den seriellen Datenausgang bildet. Außerdem liefert die serielle Schnittstelle auf der Ausgangsleitung 6 ein dazu synchrones Taktsignal. Der DMA-Controller 3, der auch als "Peripheral Event Controller" (PEC) bezeichnet wird, dient der Entlastung des zentralen Prozessors 1 von Aufgaben des Datentransfers. Er kann, von einer bestimmten Startadresse im Speicher M ausgehend, eine vorgegebene Anzahl von 8-Bit-Datenworten z.B. zur seriellen Schnittstelle 2 transportieren.

Die Anoden-Steuerschaltungen A₁,A₂...Aₙ enthalten je ein Schieberegister S₁,S₂...Sₙ mit einer Länge von 40 Bit. Die Schieberegister S₁,S₂...Sₙ sind in Serie geschaltet, so daß eine Schieberegisteranordnung mit einer Länge von n*40 Bit entsteht. An die parallelen Ausgänge jedes der Schieberegister S₁,S₂...Sₙ ist je ein Zwischenspeicher (Latch) L₁,L₂...Lₙ angeschlossen, der bei einem Latch-Signal am Ausgang 7 des Mikrocontrollers den Inhalt des zugehörigen Schieberegisters übernimmt. Die 40 Ausgänge der Zwischenspeicher L₁,L₂...Lₙ sind mit je einer Anzeigentreiber-Schaltung T₁,T₂...Tₙ verbunden, die 40 Anzeigentreiber enthält (in der Zeichnung ist nur ein als Inverter-Schaltung dargestellter Anzeigentreiber symbolisch angedeutet), von denen 35 mit den Anoden-Anschlußleitungen der VFD-Anzeigeeinheiten D₁,D₂...Dₙ verbunden sind. Somit bestimmt der Inhalt der Zwischenspeicher L₁,L₂...Lₙ, was in der jeweils aktivierten Anzeigestelle der zugehörigen Anzeigeeinheit D₁,D₂...Dₙ angezeigt wird.

Welche Anzeigeeinheit jeweils aktiviert ist, wird von den Gitter-Steuerschaltungen G₁,G₂...Gₙ bestimmt. Sie können mit den Anoden-Steuerschaltungen A₁,A₂...Aₙ identisch sein; da damit aber nur 20 Gitter gesteuert werden müssen, müssen sie nur 20 Steuerkanäle haben. Als Steuerschaltungen geeignet sind integrierte Schaltungen des Typs MSC 1164 (OKI), wobei für die Anodensteuerung zwei und für die Gittersteuerung eine dieser Schaltungen benutzt werden. Die Gitter-Steuerschaltungen G₁,G₂...Gₙ enthalten jeweils ein 20-Bit-Schieberegister, dessen parallele Ausgänge über (für die Gitter-Steuerung) an sich nicht erfoderliche Zwischenspeicher und Treiberschaltungen mit den 20 Gitterleitungen der zugehörigen Anzeigeeinheit D₁,D₂...Dₙ verbunden sind. Die Schieberegister sind in Serie geschaltet, wobei der Dateneingang des ersten Schieberegisters (G₁) mit einem Ausgang 8 des Mikrocontrollers verbunden ist und wobei der Takteingang aller Schieberegister mit einem Ausgang 9 des Mikrocontrollers verbunden ist. Jedes Schieberegister enthält zu jedem Zeitpunkt nur eine einzige "1", so daß nur jeweils eine einzige der 20 Anzeigestellen der zugehörigen VFD-Anzeigeeinheit D₁,D₂...Dₙ aktiviert ist.

Damit der Betrachter eine flimmerfreie Anzeige erhält, müssen die 20 Anzeigestellen periodisch nacheinander so schnell ein- und ausgeschaltet werden, daß der Betrachter den Wechsel der Anzeigestellen nicht bemerkt. Ein üblicher Wert für die Anzeige-Wiederholfrequenz ist 100 Hz, d.h. die Anzeige wiederholt sich jeweils nach 10 ms. Bei 20 Anzeigestellen verbleibt dann pro Anzeigestelle eine Anzeigeperiode T = 0,5 ms. Im folgenden wird die Funktion der Schaltung für eine Anzeigeperiode T geschildert. Bei Beginn der Periode wird von einem internen Timer des Mikrocontrollers MC ein Interrupt-Signal erzeugt. Der zentrale Prozessor 1 führt daraufhin folgende Befehle aus:
a) Erzeugen eines Latch-Signals auf der Ausgangsleitung 7. Dadurch wird der momentane Inhalt der Schieberegister S₁,S₂...Sₙ in die Zwischenspeicher L₁,L₂...Lₙ übernommen.
b) Auf der Ausgangsleitung 9 wird ein Taktimpuls für die Schieberegister der Gitter-Steuerschaltungen G₁,G₂...Gₙ erzeugt, so daß die Anzeige auf die nachfolgende Anzeigestelle umspringt.
c) Wenn zuvor die letzte Anzeigestelle der Anzeigeeinzeiten D₁,D₂...Dₙ aktiviert war, so daß anschließend wieder die erste Anzeigestelle aktiviert werden muß, was jeweils nach 20 Takten T der Fall ist, wird auf den Datenausgang 8 eine "1" erzeugt und auf den ersten Platz des Schieberegisters G₁ eingeschrieben. Dies ist erforderlich, weil in diesem Fall eine "1" vom letzten Platz eines jeden Schieberegisters auf den ersten Platz des nachgeschalteten Schieberegisters übergeht und anderenfalls im ersten Schieberegister G₁ keine "1" mehr enthalten (und mithin keine Anzeigestelle aktiviert) wäre.
d) Der zentrale Prozessor 1 gibt dem DMA-Controller 3 die Startadresse vor, unter der im Speicher M für die in der nächsten Periode T zu aktivierende Anzeigestelle das erste Byte der anzuzeigenden Information gespeichert ist, und die Zieladresse, unter der das unter der Startadresse gespeicherte Byte transportiert werden soll. Dies ist die Adresse der seriellen Schnittstelle 2. Schließlich gibt der zentrale Prozessor 1 dem DMA-Controller 3 noch die Anzahl der Bytes vor, die aus dem Speicher M innerhalb der Periode T zur seriellen Schnittstelle 2 transportiert werden müssen und die im Speicher M mit einer auf die Startadresse aufbauenden, auf- oder absteigenden Adressenfolge gespeichert sind.

Danach sind die Steueraufgaben des Zentralprozessors 1, soweit sie die Anzeigesteuerung betreffen, abgearbeitet, und der DMA-Controller 3 wird aktiv und transportiert byteweise die in der nächsten Anzeigeperiode T anzuzeigenden Daten aus dem Speicher M zur seriellen Schnittstelle 2. Voraussetzung dafür ist, daß diese n*5 Bytes (für jede der n Anzeigeeinheiten werden 5 Bytes benötigt) im Speicher M unter aufeinanderfolgenden Adressen gespeichert sind, die mit der vorgegebenen Startadresse beginnen, wobei die für die letzte Anzeigeeinheit Dₙ bestimmten Daten zuerst und die für die erste Anzeigeeinheit D₁ bestimmten Daten zuletzt aufgerufen werden müssen.

Die serielle Schnittstelle 2 setzt dann die ihr parallel zugeführten Daten in einen seriellen Datenstrom auf der Datenleitung 5 um, der mit dazu synchronen Taktpulsen auf der Taktleitung 6 in die Schieberegister übernommen wird. Vor Anlauf der Anzeigeperiode T müssen sämtliche zu transportierenden Bytes seriell umgewandelt und in der Schieberegisteranordnung S₁,S₂...Sₙ gespeichert sein, so daß sie in der nächsten Anzeigeperiode in die Zwischenspeicher L₁,L₂...Lₙ übernommen werden können. Die Zahl der Anzeigeeinheiten, die auf diese Weise über eine synchrone serielle Schnittstelle gesteuert werden können, hängt von der Zahl der Bytes ab, die die serielle Schnittstelle innerhalb der Anzeigeperiode T von 0,5 ms in einen seriellen Datenstrom umsetzen kann. Bei dem angegebenen Mikrocontroller sind dies etwa 100 Bytes, so daß 20 Anzeigeeinheiten (n = 20) auf diese Weise gesteuert werden könnten.

Wenn man die wiederzugebenden Daten den VFD-Anzeigeeinheiten D₁,D₂...Dₙ nicht während der gesamten Anzeigeperiode T zuführt, sondern nur während eines Bruchteils davon, ergibt sich für den Betrachter der Eindruck einer verringerten Helligkeit. Dies wird bei der individuellen Steuerung der Helligkeit der Anzeigeeinheiten D₁,D₂...Dₙ mittels der Einheit 4 im Mikrocontroller ausgenutzt. Diese Einheit besitzt mehrere voneinander unabhängige Timer, mit deren Hilfe sie innerhalb einer Anzeigeperiode auf ihren Ausgangsleitungen, von denen in der Zeichnung nur zwei - die Ausgangsleitungen 10 und 11 - dargestellt sind, ein Blockierimpuls erzeugt wird. Diese Ausgangsleitungen sind mit einem Steuereingang der Anzeigeeinheiten D₁,D₂...Dₙ verbunden, der bei einem Blockierimpuls die zu dieser Schaltung gehörenden Treiber blockiert, so daß danach alle Gitter blockiert sind und die Anzeige erst in der nächsten Anzeigeperiode und an der nächsten Anzeigestelle fortgeführt wird.

Der zentrale Prozessor 1 führt zur Steuerung der Anzeige innerhalb einer Anzeigeperiode nur wenige Befehle aus. Er ist außerdem während der 5*n Befehlszyklen (von je 100 ns Dauer) blockiert, während denen der DMA-Controller die Anzeigedaten vom Speicher M zur seriellen Schnittstelle 2 transportiert (aber nicht während der Zeit, innerhalb der die serielle Schnittstelle diese parallelen Daten in serielle Daten umsetzt). Dadurch ist der zentrale Prozessor 1 nur während maximal 20% einer jeden Anzeigeperiode blockiert bzw. mit der Steuerung der Anzeige beschäftigt. Während des verbleibenden restlichen Teils der Anzeigeperiode kann er daher noch eine Anzahl weiterer Steueraufgaben durchführen.

Die erfindungsgemäße Anzeigeanordnung eignet sich insbeondere zur Anzeige alphnumerischer Daten in einem Röntgengenerator.

## Patentansprüche

1. Anzeigeanordnung mit mehreren Anzeigeeinheiten (D₁,D₂...Dₙ), wobei jede Anzeigeeinheit sich aus einer Anzahl von im Multiplex-Betrieb gesteuerten Anzeigestellen zusammensetzt, von denen jede eine Mehrzahl von gleichzeitig, aber unabhängig voneinander schaltbaren Anzeigeelementen mit je einem Anzeigetreiber (z.B. T₁) umfaßt, und mit einer Schaltungsanordnung zur Steuerung der Anzeigeanordnung
gekennzeichnet durch
a) einen Speicher (M), in dem die auf der Anzeigeanordnung auszugebende Information gespeichert ist,
b) einen Mikrocontroller (MC) mit wenigstens einer synchronen seriellen Schnittstelle (2) und mit periodisch aktivierten Mitteln (3) zum Transfer der jeweils für die gleiche Anzeigestelle der Anzeigeeinheiten (D₁,D₂...Dₙ) bestimmten Daten vom Speicher zur Schnittstelle,
c) eine an die serielle Schnittstelle (2) angeschlossenen Schieberegisteranordnung (S₁, S₂...Sₙ) mit parallelem Ausgang und
d) an den parallelen Ausgang der Schieberegisteranordnung angeschlossene Speicherglieder (L₁, L₂...Lₙ) zur periodischen Übernahme des Inhalts der Schieberegisteranordnung und zur Steuerung der Anzeigetreiber (T₁, T₂...Tₙ) .

2. Anzeigeanordnung nach Anspruch 1, dadurch gekennzeichnet, daß die Mittel zum Transfer der Daten einen DMA-Controller (3) umfassen.

3. Anzeigeanordnung nach Anspruch 1, dadurch gekennzeichnet, daß die Anzeigeeinheiten Vakuumfluoreszenz-Anzeigeeinheiten (D₁,D₂...Dₙ) sind, deren Anzeigestellen durch eine matrixförmige Anordnung der Matrixelemente gebildet wird.

4. Anzeigeanordnung nach Anspruch 1, gekennzeichnet durch Mittel (4) zum Steuern der Einschaltdauer der Anzeigestellen.

5. Verwendung einer Anzeigeeinheit nach Anspruch in einem Röntgengenerator.
